# EUROPEAN PATENT SPECIFICATION

(11) **EP 2 076 350 B1**
(45) Date of publication and mention of the grant of the patent: **07.03.2012**
(21) Application number: 07824182.5
(22) Date of filing: 16.10.2007
(51) Int. Cl.: B23K 1/005, F28D 7/10, F28F 1/04, F28F 7/02

(54) **HEAT EXCHANGER**
WÄRMETAUSCHER
ÉCHANGEUR DE CHALEUR

(30) Priority: 16.10.2006 GB 0620512
(43) Date of publication of application: 08.07.2009
(73) Proprietor: Sustainable Engine Systems Limited, London W2 5DB (GB)
(72) Inventor: HISLOP, Drummond Watson, London W2 5DB (GB); JOSEPH, Stephen David, Saratoga, NSW 2250 (AU)
(74) Representative: Robinson, Nigel Alexander Julian
(86) International application number: PCT/GB2007/003931
(87) International publication number: WO 2008/047096

(56) References cited:
- WO-A-03/033985
- WO-A-2006/064202
- DE-A1- 19 944 951
- DE-U1- 29 613 438
- FR-A- 588 533
- US-A- 4 346 753

## Description

This invention relates to the field of heat exchangers.

Published PCT Patent Application WO-A-2006/064202 describes a compact heat exchanger and reactor (CHXR) that can be manufactured by energy beam methods, such as selective laser remelting (SLR). Compact heat exchangers formed in this way are capable of providing large numbers of fine conduits with associated complex manifolding arrangements in a way that produces a high heat exchange surface area to volume ratio. However, a problem with such heat exchangers is that the manufacturing process can be disadvantageously slow and expensive. The remelting of material to form the conduits takes a significant amount of time and accordingly the greater the wall material requiring remelting that is present within the heat exchanger design, the longer it will take to manufacture that heat exchanger. A further problem is that whilst it is desirable to have thin conduit walls so as to promote high levels of heat transfer, significant pressure differentials can exist between different sides of the walls resulting in it being necessary to provide a greater wall thickness in order to withstand the forces resulting from such pressure differences. Such thickened conduit walls again take longer to manufacture and reduce the level of heat transfer.

FR 588 533A discloses tessellating bricks to be used in a heat exchanger for the heating of air, the heat exchanger using the bruks disclosing then the features in the preamble of claim 1.

Viewed from one aspect the present invention provides a heat exchanger comprising:
a body with a portion having a plurality of substantially parallel fluid carrying tessellating conduits passing therethrough, wherein
said tessellating conduits have transverse cross-sections with one or more shapes that substantially completely cover a plane through said portion of said body transverse to said tessellating conduits by repeated use of said one or more shapes
wherein said tessellating conduits are outer conduits of respective conduit pairs, each conduit pair being an outer conduit and an inner conduit disposed within said outer conduit over at least a part of said outer conduit.

The present invention recognises that tessellating conduits having cross-sections with shapes that fit together substantially to completely cover a plane transverse to those conduits result in a heat exchanger with a reduced amount of wall material. This makes manufacturing quicker and less expensive as well as providing other advantages. The tessellating shapes provide arrangements in which at least some neighbouring conduits can have the same contained fluid pressure and accordingly reduces the forces exerted on the conduit walls in a way which enable such conduit walls to be advantageously thinner. The tessellating conduits each form an outer conduit of a conduit pair with an inner conduit being disposed within the outer conduit along at least a part of the outer conduit. Such a pipe-in-pipe arrangement is capable of providing a high level of heat transfer area to volume ratio.

Whilst it will be appreciated that there are many shapes, and combinations of shapes, which have the property of tessellating to cover a plane, design of the heat exchanger is advantageously simplified when the tessellating conduits have one shape which regularly tessellates to cover the plane.

Whilst regular tessellation can be achieved by a variety of shapes, a particularly preferred shape is that of a regular hexagon. Regular hexagons have internal angles which are not too sharp (i.e. reducing potential stress risers) and tend toward a circular cross-section which is able to provide a good degree of strength against internal or external pressure.

The tessellating outer conduits substantially completely fill the plane of a transverse cross-section of the heat exchanger body in a way that avoids redundant "dead spaces" which might reduce the heat transfer surface area to volume ratio and might also reduce the surface porosity. If these "dead spaces" were to be filled with material that material would require remelting and increase manufacture time. Simultaneously, the inner conduits are surrounded by the fluid contained within the outer conduits in a way which gives a high degree of heat transfer.

The inner conduits can have a variety of different shapes, but a circular cross-section provides a good degree of strength for the amount of material used.

The inner conduits may be held in position by arms extending from the inner conduits to the outer conduits. This arrangement is capable of providing a high degree of strength in the heat exchanger body.

Returning to consideration of the tessellating conduits themselves, the tessellating conduits may be arranged in concentric rings with adjacent rings being connected to receive different fluids. Thus, rings of tessellating conduits can together give rise to a collection equivalent to a pipe-in-pipe arrangement, even though conduit pairs are not being used. It would also be possible to use conduit pairs in combination with such a concentric ring arrangement.

The efficiency of the present embodiments in reducing the amount of material needed to form the body of the heat exchanger are such that a tessellating conduit completely surrounded by neighbouring tessellating conduits will share all of its walls with respective tessellating conduits. These shared walls will be monolithic (formed of a single piece of material).

It will be appreciated that at the edges of the heat exchanger body, the tessellating conduits will not be surrounded by neighbouring tessellated conduits. Such edge conduits can have a different shape to those within the main body of the heat exchanger and may also have thickened exterior walls to better resist pressure differences.

The conduits may be further strengthened by having thickened walls proximal to their vertices and having curved vertices rather than sharp corners.

Whilst heat exchangers having the structural form described above are advantageous however manufactured, they are particularly well suited to manufacture from remelted material, that is layers of material remelted with an energy beam to form part of the body prior to addition of a successive layer of material that will be remelted.

It will be appreciated that manifolds are needed to connect to the conduits formed within the heat exchanger body and these will have a complex form given the detailed and complex form of the heat exchanger body. The use of remelted layers of material to manufacture such manifolds is highly convenient.

Whilst the heat exchangers formed in accordance with the present technique can have a high surface area to volume ratio compared to conventional heat exchangers, this can in some embodiments of the invention be made to exceed 5000m²/m³, or in more preferred embodiments 10000m²/m³. or in still more preferred embodiments 15000m²/m³. Some of these gains may be counteracted by an associated increase in pressure drop through the heat exchanger, although this may be addressed by the use of a larger number of shorter conduits.

Viewed from another aspect the present invention provides a method of making at least a portion of a heat exchanger, said portion having a plurality of tessellating conduits passing therethrough, said method comprising the steps of:
providing a plurality of successive layers of a material to be remelted; and
energy beam remelting predetermined regions of each layer in accordance with a predetermined design, said energy beam remelting of each layer being performed prior to addition of a successive layer;
wherein said predetermined regions of each layer subjected to energy beam remelting form solid structures within said layer and said energy beam remelting of each layer fuses said predetermined regions of each layer to remelted regions of a preceding layer;
said tessellating conduits have transverse cross-sections with one or more shapes that substantially completely cover a plane through said portion of said body transverse to said tessellating conduits by repeated use of said one or more shapes; and
wherein said tessellating conduits are outer conduits of respective conduit pairs, each conduit pair being an outer conduit and an inner conduit disposed within said outer conduit over at least a part of said outer conduit.

Example embodiments of the invention will now be described, by way of example only, with reference to the accompanying drawings in which:
Figure 1 schematically illustrates a transverse section through a heat exchanger body formed of a plurality of tessellating conduits;
Figures 2 and 3 illustrate further examples of shapes of conduits which can completely cover a transverse plane;
Figure 4 is a diagram schematically illustrating a manufacturing process for a heat exchanger;
Figure 5 is a section through a small number of conduit pairs;
Figure 6 is a cross-section through a heat exchanger formed of conduit pairs with the outer conduit of each pair being a tessellating conduit;
Figure 7 is a longitudinal section through the heat exchanger body of Figure 6; and
Figure 8 schematically illustrates the heat exchanger body with manifolds attached at one face.

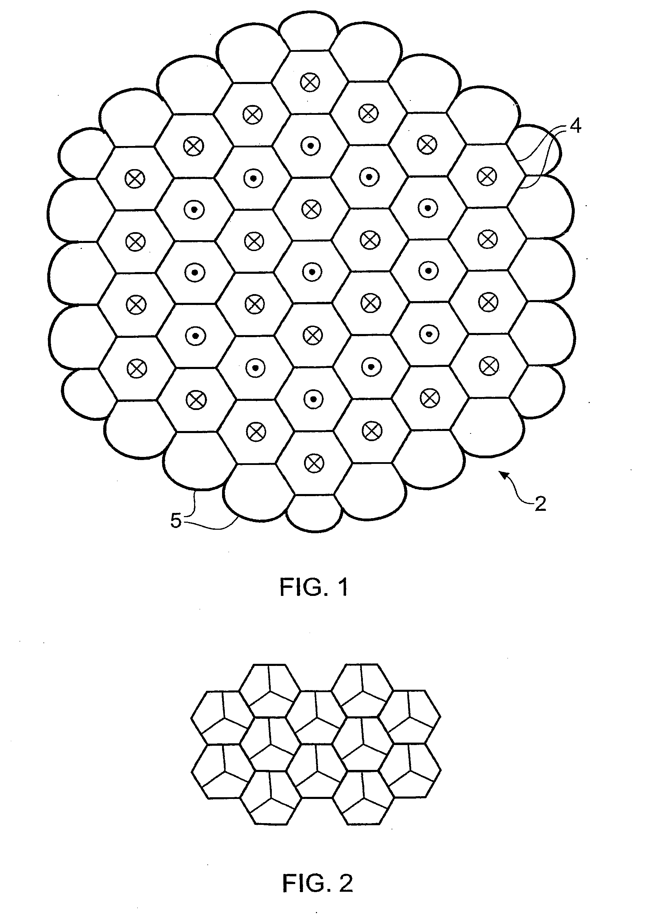

Figure 1 schematically illustrates a transverse section through a heat exchanger body 2. This heat exchanger body 2 is formed of a plurality of tessellating conduits 4 in the form of regular hexagons. Starting at the centre of the heat exchanger body 2 these tessellating conduits 4 are arranged in concentric rings. The flow direction in alternate centric rings is opposite. Thus, the centremost conduit has a flow direction corresponding to upwards out of the Figure, the neighbouring six tessellating conduits have a flow direction downwards in to the Figure and so forth. The shared walls between the tessellating conduits 4 are monolithic (integrally formed of solid material).

Within the body of the heat exchanger 2, a tessellating conduit 4 will be completely surrounded by neighbouring tessellating conduits. Each wall forming such a tessellating conduit is shared with one of its neighbouring tessellating conduits 4. The walls are thickened towards the vertices of the cross-section so as to better resist stress. Furthermore, the vertices are curved rather than having sharp corners so as to reduce stress risers.

At the edge of the heat exchanger body 2 the tessellating conduits 4 are not completely surrounded by neighbouring tessellating conduits. Accordingly, the shapes of these edge tessellating conduits 5 can differ from those within the main body of the heat exchanger 2. Furthermore, the outermost walls of these edge conduits may be thickened relative to the walls within the main body of the heat exchangers so that these edge conduit 5 can better resist higher pressure differences across the outermost walls.

As previously mentioned, the alternating concentric rings are connected by appropriate manifolds (not shown) to pass fluid in different directions. These fluids may be different fluids, such as a combusting air gas mixture in one set of rings and water to be heated in another set of rings. The inner surfaces of the tessellating conduits 4 containing the combusting air gas mixture may be coated with an appropriate catalyst to promote such combustion.

Figure 2 illustrates another example form of a collection of tessellating shapes which can be arranged to form tessellating conduits 4 within a heat exchanger. It will be appreciated that the view in Figure 2 is a transverse cross-section through a portion of a heat exchanger using such a conduit shape.

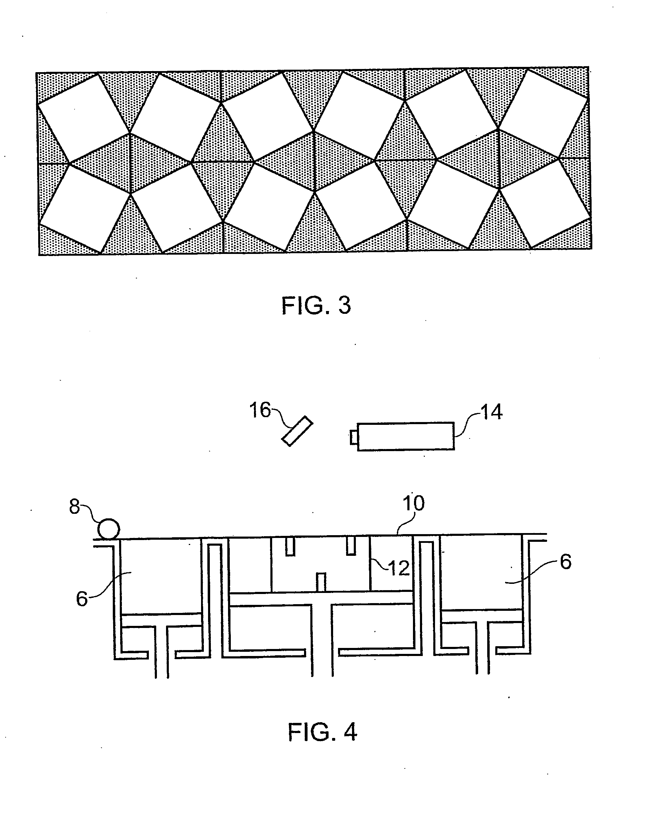

Figure 3 illustrates a further example of tessellating conduits 4, in this case using two different shapes which are repeated so as to completely fill the plane, namely a square and a triangle.

It will be appreciated that many other forms of tessellating shapes and patterns are possible and that the use of such patterns reduces the amount of wall material required since there will not be "dead spaces" between the conduits needing to be filled with excessive wall material.

Figure 4 schematically illustrates a device for manufacturing heat exchangers in accordance with the present techniques. The manufacturing technique may be the same as described in WO-A-2006/064202 (the entire content of which is incorporated herein by reference, including the details of manufacturing technique and the preferred conduit forms and features). In particular, hoppers 6 of powdered material are used to successively dispense that powdered material to distributed by a roller 8 across the upper surface of a target body forming region 10. A partially formed heat exchanger body 12 is illustrated. This partially formed heat exchanger body 12 has a thin layer of powdered material spread across its upper surface by the roller 8. A scanned energy beam produced by, for example, a laser 14 and a scanning mirror 16 is used to selectively remelt portions of this powdered material at desired points above the partially formed heat exchanger body 12 so as to form the solid walled portions for that next layer. In this way, the 3-dimensional shape of the heat exchanger body 12 is built up on a layer-by-layer basis with the walls between conduits being solid monolithic structures. This manufacturing technique allows a great deal of flexibility to be achieved in the 3-dimensional form of the shapes produced and accordingly permits complex and highly detailed, as well as finely formed, shapes of the heat exchangers described herein to be achieved.

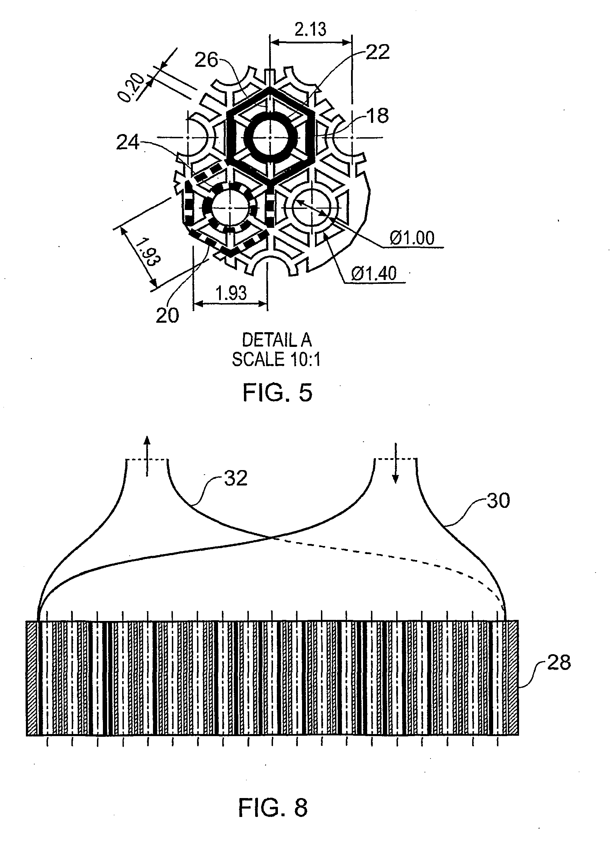

Figure 5 illustrates a small portion of a transverse section through a heat exchanger body in accordance with one example embodiment. In this example embodiment the tessellating conduits have a transverse cross-section in the form of a regular hexagon 18, 20. Within each of these tessellating conduits there is disposed an inner conduit 22, 24 having a substantially circular transverse cross-section. Arms 26 extend between the outer conduits 18, 20 (tessellating conduits) and the inner conduits 22, 24. The outer conduits 18, 20 and the inner conduits 22, 24 form conduit pairs each having one outer conduit 18 and one inner conduit 22.

In the example shown, the outer conduits 18, 20 carry fluid in one direction (e.g. up from the plane of the drawing), whereas the inner conduits 22, 24 carry fluid in the opposite direction (e.g. down into the plain of the drawing). As the outer conduits 18, 20 neighbour other outer conduits carrying the same fluid in the same direction they will tend to have the same internal pressure on either side of the walls forming the boundary between those outer conduits 18, 20. This reduces the stress on these walls an enables them to be thinner requiring less material to be used. It will be appreciated that heat transfer also occurs due to heat conduction through the walls and the arms 26, as well as directly from the fluid within the conduits across the wall of the inner conduits 22, 24.

The inner conduits 22, 24 are parallel with and pass along at least a portion of the outer conduits so as to form a pipe-in-pipe arrangement.

The dimensions given in Figure 5 are for one example embodiment and are in millimetres. It will be seen from this that the heat exchange body of this example embodiment provides fine conduits with wall thicknesses of 0.2mm. This type of structure is well suited to manufacture by the selective laser remelting technique of Figure 4.

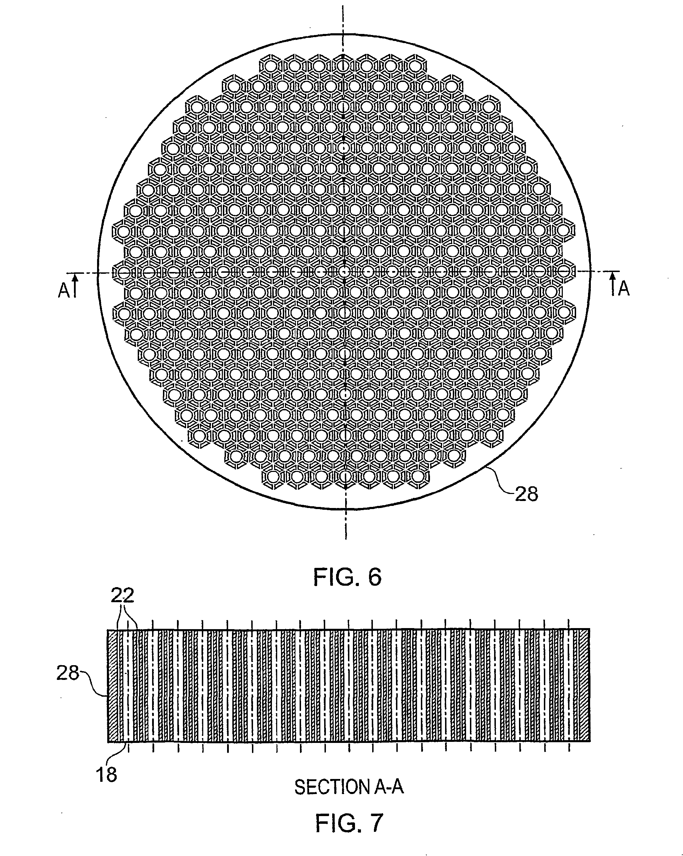

Figure 6 illustrates a transverse section through a heat exchanger body 28 formed of a large number of the conduit pairs 18, 22 illustrated in Figure 5. The conduit pairs at the outer edge of the heat exchanger body 28 can have a different shape (cross-section), or in this example embodiment are provided with greatly thicker walls. Such a heat exchanger 28 can achieve a high value for the ratio between the heat exchange surface area and the volume of the heat exchanger. The present techniques can be used to obtain a value for this ratio of greater than 5000 metre squared per cubic metre. More preferred embodiments can increase this to greater than 10000 metre square per cubic metre or even 15000 metre squared per cubic metre, although there may be an accompanying increase in pressure drop.

Figure 7 is a longitudinal section through the heat exchanger 28 showing the outer conduit 22 and the inner conduit 18 in one example conduit pair.

Figure 8 illustrates the heat exchanger body 28 with manifolds 30, 32 respectively provided to connect to the outer conduits 22 and the inner conduits 18. These manifolds, 30, 32 have a complex form and are well suited to manufacture with the selective laser beam remelting techniques since the manifold passages (including many collectors) have to pass between one another and be gathered and merged into the major inlets and outlets. It will be appreciated that corresponding manifolds will be provided on the opposite face of the heat exchanger body 28, although these are not shown in Figure 8.

## Claims

1. A heat exchanger comprising:
a body (2) with a portion having a plurality of substantially parallel fluid carrying tessellating conduits (4) passing therethrough, wherein
said tessellating conduits have transverse cross-sections with one or more shapes that substantially completely cover a plane through said portion of said body transverse to said tessellating conduits by repeated use of said one or more shapes
**characterised in that** said tessellating conduits are outer conduits (18, 20) of respective conduit pairs, each conduit pair being an outer conduit and an inner conduit (22, 24) disposed within said outer conduit over at least a part of said outer conduit.

2. A heat exchanger as claimed in claim 1, wherein said tessellating conduits have transverse cross-sections with one shape that regularly tessellates to cover said plane.

3. A heat exchanger as claimed in claim 2, wherein said tessellating conduits have regular hexagonal (18, 20) transverse cross-sections.

4. A heat exchanger as claimed in claim 1, wherein said outer conduit and said inner conduit within a conduit pair are connected to receive respective different fluids.

5. A heat exchanger as claimed in any one of claims 1 and 4, wherein said inner conduits have a substantially circular transverse cross-section.

6. A heat exchanger as claimed in any one of claims 1 to 5, wherein within a conduit pair a plurality of arms extend from said inner conduit to said outer conduit to hold said inner conduit in position.

7. A heat exchanger as claimed in any one of claims 1 to 6, wherein said tessellating conduits are arranged in concentric rings with tessellating conduits in adjacent rings being connected to receive respective different fluids.

8. A heat exchanger as claimed in any one of the preceding claims, wherein neighbouring tessellating conduits have polygonal transverse cross-sections and walls between neighbouring tessellating conduits are shared such that all walls of a tessellating conduit completely surrounded by neighbouring tessellating conduits are shared walls.

9. A heat exchanger as claimed in any one of the preceding claims, wherein an edge conduit being a tessellating conduit not completely surrounded by other tessellating conduits has a transverse cross-section differing from said one or more shapes.

10. A heat exchanger as claimed in claim 9, wherein said edge conduit has at least one wall shared with a neighbouring tessellating conduit and at least one wall not shared with a neighbouring tessellating conduit and thicker than said at least one wall shared with a neighbouring tessellating conduit.

11. A heat exchanger as claimed in any one of the preceding claims, wherein conduit walls of said tessellating conduits thicken proximal to vertices of said one or more shapes.

12. A heat exchanger as claimed in claim 11, wherein said conduit walls are curved at said vertices.

13. A heat exchanger as claimed in any one of the preceding claims, wherein said body is formed of remelted material being layers of material remelted with an energy beam to form part of said body prior to addition of a successive layer.

14. A heat exchanger as claimed in any one of the preceding claims, comprising one or more fluid manifolds (30, 32) connected to said tessellating conduits, said one or more fluid manifolds being formed of remelted material being layers of material remelted with an energy beam to form part of said manifold prior to addition of a successive layer.

15. A heat exchanger as claimed in any one of the preceding claims, wherein said heat exchanger has surface area to volume ratio of greater than one of:
5000 m²/m³;
10000 m²/m³; and
15000 m²/m³.

16. A method of making at least a portion of a heat exchanger, said portion having a plurality of tessellating conduits passing therethrough, said method comprising the steps of:
providing a plurality of successive layers of a material to be remelted; and
energy beam remelting predetermined regions of each layer in accordance with a predetermined design, said energy beam remelting of each layer being performed prior to addition of a successive layer;
wherein said predetermined regions of each layer subjected to energy beam remelting form solid structures within said layer and said energy beam remelting of each layer fuses said predetermined regions of each layer to remelted regions of a preceding layer;
said tessellating conduits have transverse cross-sections with one or more shapes that substantially completely cover a plane through said portion of said body transverse to said tessellating conduits by repeated use of said one or more shapes; and
wherein said tessellating conduits are outer conduits (18, 20) of respective conduit pairs, each conduit pair being an outer conduit and an inner conduit (22, 24) disposed within said outer conduit over at least a part of said outer conduit.

## Patentansprüche

1. Wärmetauscher mit:
einem Körper (2) mit einem Abschnitt, der eine Mehrzahl von im Wesentlichen parallelen fluidführenden mosaikartigen Leitungen, die durch diesen verlaufen, aufweist, wobei
die mosaikartigen Leitungen Quer-Querschnitte mit einer oder mehreren Formen aufweisen, die im Wesentlichen eine Ebene des Abschnitts des Körpers quer zu den mosaikartigen Leitungen vollständig bedecken durch wiederholte Verwendung der einen oder mehreren Formen,
**dadurch gekennzeichnet, dass** die mosaikartigen Leitungen äußere Leitungen (18, 20) entsprechender Leitungspaare sind, wobei jedes Leitungspaar eine äußere Leitung und eine innere Leitungen (22, 24), die über mindestens einen Teil der äußeren Leitung innerhalb der äußeren Leitung angeordnet ist, aufweist.

2. Wärmetauscher nach Anspruch 1, wobei die mosaikartigen Leitungen Quer-Querschnitte aufweisen mit einer Form, die regelmäßig mosaikartig angeordnet ist, sodass sie die Ebene bedeckt.

3. Wärmetauscher nach Anspruch 2, wobei die mosaikartigen Leitungen regelmäßige hexagonale (18, 20) Quer-Querschnitte aufweisen.

4. Wärmetauscher nach Anspruch 1, wobei die äußere Leitung und die innere Leitung innerhalb eines Leitungspaares so angeschlossen sind, dass sie jeweils verschiedene Fluide aufnehmen.

5. Wärmetauscher nach einem der Ansprüche 1 und 4, wobei die inneren Leitungen einen im Wesentlichen kreisförmigen Quer-Querschnitt aufweisen.

6. Wärmetauscher nach einem der Ansprüche 1 bis 5, wobei sich innerhalb eines Leitungspaares eine Mehrzahl von Armen von der inneren Leitung zu der äußeren Leitung erstrecken, sodass sie die innere Leitung am Ort halten.

7. Wärmetauscher nach einem der Ansprüche 1 bis 6, wobei die mosaikartigen Leitungen in konzentrischen Ringen angeordnet sind, wobei die mosaikartigen Leitungen in benachbarten Ringen so angeschlossen sind, dass sie jeweils verschiedene Flüssigkeiten aufnehmen.

8. Wärmetauscher nach einem der vorhergehenden Ansprüche, wobei benachbarte mosaikartige Leitungen polygonale Quer-Querschnitte aufweisen und Wände zwischen benachbarten mosaikartigen Leitungen gemeinsam genutzt werden, sodass alle Wände einer mosaikartigen Leitung, die vollständig von benachbarten mosaikartigen Leitungen umgeben sind, gemeinsam genutzte Wände sind.

9. Wärmetauscher nach einem der vorhergehenden Ansprüche, wobei eine Kantenleitung, die eine mosaikartige Leitung ist, die nicht vollständig von anderen mosaikartigen Leitungen umgeben ist, einen Quer-Querschnitt aufweist, der von der einen oder den mehreren Formen abweicht.

10. Wärmetauscher nach Anspruch 9, wobei die Kantenleitung mindestens eine mit einer benachbarten mosaikartigen Leitung gemeinsam genutzte Wand aufweist und mindestens eine Wand, die nicht mit einer benachbarten mosaikartigen Leitung gemeinsam genutzt wird und die dicker ist als die mindestens eine mit einer benachbarten mosaikartigen Leitung gemeinsam genutzte Wand.

11. Wärmetauscher nach einem der vorhergehenden Ansprüche, wobei sich Leitungswände der mosaikartigen Leitungen proximal zu Spitzen der einen oder der mehreren Formen hin verdicken.

12. Wärmetauscher nach Anspruch 11, wobei die Leitungswände an den Spitzen gekrümmt sind.

13. Wärmetauscher nach einem der vorhergehenden Ansprüche, wobei der Körper aus umgeschmolzenem Material gebildet ist, das aus Schichten von in einem Energiestrahl umgeschmolzenen Material gebildet ist, sodass ein Abschnitt des Körpers gebildet wird vor dem Hinzufügen einer nachfolgenden Schicht.

14. Wärmetauscher nach einem der vorhergehenden Ansprüche mit einem oder mehreren Fluidverteilern (30, 32), die mit den mosaikartigen Leitungen verbunden sind, wobei der eine oder die mehreren Fluidverteiler aus einem umgeschmolzenen Material gebildet sind, das aus Schichten aus mit einem Energiestrahl umgeschmolzenen Material gebildet ist, sodass ein Abschnitt des Verteilers gebildet wird vor dem Hinzufügen einer nachfolgenden Schicht.

15. Wärmetauscher nach einem der vorhergehenden Ansprüche, wobei der Wärmetauscher ein Oberflächen-zu-Voiumen-Verhältnis größer als eines der folgenden aufweist:
5000 m²/m³
10000 m²/m³ und
15000 m²/m³.

16. Verfahren zum Herstellen mindestens eines Abschnitts eines Wärmetauschers, wobei der Abschnitt eine Mehrzahl von mosaikartigen Leitungen, die durch diesen verlaufen, aufweist, wobei das Verfahren die Schritte aufweist:
Bereitstellen einer Mehrzahl von aufeinanderfolgenden Schichten aus einem umzuschmelzenden Material und
Energiestrahlumschmelzen vorbestimmter Bereiche jeder Schicht in Übereinstimmung mit einer vorbestimmten Gestaltung, wobei das Energiestrahlumschmelzen jeder Schicht vor dem Hinzufügen einer nachfolgenden Schicht ausgeführt wird,
wobei die vorbestimmten Bereiche jeder Schicht, die einem Energiestrahlumschmelzen unterzogen werden, feste Strukturen innerhalb der Schicht bilden und das Energiestrahlumschmelzen jeder Schicht die vorbestimmten Bereiche jeder Schicht mit umgeschmolzenen Bereichen einer vorhergehenden Schicht verschmilzt,
wobei mosaikartige Leitungen Quer-Querschnitte mit einer oder mehreren Formen aufweisen, die eine Ebene durch den Abschnitt des Körpers quer zu den mosaikartigen Leitungen im Wesentlichen vollständig bedecken, durch wiederholte Verwendung der einen oder mehreren Formen, und
wobei die mosaikartigen Leitungen äußere Leitungen (18, 20) entsprechender Leitungspaare sind, wobei jedes Leitungspaar eine äußere Leitung und eine innere Leitung (22, 24), die über mindestens einen Teil der äußeren Leitung innerhalb der äußeren Leitung angeordnet ist, ist.

## Revendications

1. Echangeur de chaleur comprenant :
un corps (2) avec une partie dotée d'une pluralité de conduits en mosaïque transportant du fluide, sensiblement parallèles (4) qui passent à travers celle-ci, dans lequel
lesdits conduits en mosaïque présentent des sections transversales avec une ou plusieurs formes qui couvrent sensiblement complètement un plan au travers de ladite partie dudit corps transversalement auxdits conduits en mosaïque par l'usage répété de ladite une ou plusieurs formes ;
**caractérisé en ce que** lesdits conduits en mosaïque sont des conduits extérieurs (18, 20) de paires de conduits respectives, chaque paire de conduits étant un conduit extérieur et un conduit intérieur (22, 24) disposé dans ledit conduit extérieur sur au moins une partie dudit conduit extérieur.

2. Echangeur de chaleur selon la revendication 1, dans lequel lesdits conduits en mosaïque présentent des sections transversales en mosaïque régulière pour couvrir ledit plan.

3. Echangeur de chaleur selon la revendication 2, dans lequel lesdits conduits en mosaïque présentent des sections transversales hexagonales régulières (18, 20).

4. Echangeur de chaleur selon la revendication 1, dans lequel ledit conduit extérieur et ledit conduit intérieur dans une paire de conduits sont reliés pour recevoir différents fluides respectifs.

5. Echangeur de chaleur selon l'une quelconque des revendications 1 et 4, dans lequel lesdits conduits intérieurs présentent une section transversale sensiblement circulaire.

6. Echangeur de chaleur selon l'une quelconque des revendications 1 à 5, dans lequel dans une paire de conduits, une pluralité de bras s'étend dudit conduit intérieur audit conduit extérieur afin de maintenir ledit conduit intérieur en position.

7. Echangeur de chaleur selon l'une quelconque des revendications 1 à 6, dans lequel lesdits conduits en mosaïque sont disposés en anneaux concentriques avec des conduits en mosaïque dans des anneaux adjacents reliés pour recevoir différents fluides respectifs.

8. Echangeur de chaleur selon l'une quelconque des revendications précédentes, dans lequel des conduits en mosaïque contigus présentent des sections transversales polygonales et des parois entre des conduits en mosaïque contigus sont partagées de sorte que toutes les parois d'un conduit en mosaïque complètement entouré par des conduits en mosaïque contigus soient des parois partagées.

9. Echangeur de chaleur selon l'une quelconque des revendications précédentes, dans lequel un conduit de bord qui est un conduit en mosaïque pas complètement entouré par d'autres conduits en mosaïque présente une section transversale qui diffère de ladite une ou plusieurs formes.

10. Echangeur de chaleur selon la revendication 9, dans lequel ledit conduit de bord présente au moins une paroi partagée avec un conduit en mosaïque contigu et au moins une paroi non partagée avec un conduit en mosaïque contigu et plus épaisse que ladite au moins une paroi partagée avec un conduit en mosaïque contigu.

11. Echangeur de chaleur selon l'une quelconque des revendications précédentes, dans lequel des parois desdits conduits en mosaïque s'épaississent dans le sens proximal vers des sommets de ladite une ou plusieurs formes.

12. Echangeur de chaleur selon la revendication 11, dans lequel lesdites parois de conduit sont courbées aux sommets.

13. Echangeur de chaleur selon l'une quelconque des revendications précédentes, dans lequel ledit corps est constitué de matériau refondu sous la forme de couches de matériau refondu avec un faisceau d'énergie pour former une partie dudit corps avant l'ajout d'une couche successive.

14. Echangeur de chaleur selon l'une quelconque des revendications précédentes, comprenant un ou plusieurs collecteurs de fluide (30, 32) reliés auxdits conduits en mosaïque, ledit un ou plusieurs collecteurs de fluide étant constitués de matériau refondu sous forme de couches de matériau refondu avec un faisceau d'énergie pour former une partie dudit collecteur avant l'ajout d'une couche successive.

15. Echangeur de chaleur selon l'une quelconque des revendications précédentes, dans lequel ledit échangeur de chaleur présente un rapport entre la zone de surface et le volume, qui est supérieur à l'un des rapports suivants :
5 000 m²/m³ ;
10 000 m²/m³ ; et
15 000 m²/m³.

16. Procédé de fabrication d'au moins une partie d'un échangeur de chaleur, ladite partie étant dotée d'une pluralité de conduits en mosaïque passant au travers de celle-ci, ledit procédé comprenant les étapes suivantes :
fourniture d'une pluralité de couches successives d'un matériau à refondre ; et
refonte par faisceau d'énergie des régions prédéterminées de chaque couche selon une conception prédéterminée, ladite refonte par faisceau d'énergie de chaque couche étant réalisée avant l'ajout d'une couche successive ;
dans lequel lesdites régions prédéterminées de chaque couche soumise à la refonte par faisceau d'énergie forment des structures solides dans ladite couche et ladite refonte par faisceau d'énergie de chaque couche réunit lesdites régions prédéterminées de chaque couche aux régions refondues d'une couche précédente ;
lesdits conduits en mosaïque présentent des sections transversales avec une ou plusieurs formes qui couvrent sensiblement complètement un plan au travers de ladite partie dudit corps transversalement auxdits conduits en mosaïque par l'usage répété de ladite une ou plusieurs formes ; et
dans lequel lesdits conduits en mosaïque sont des conduits extérieurs (18, 20) de paires de conduits respectives, chaque paire de conduits étant un conduit extérieur et un conduit intérieur (22, 24) disposé dans ledit conduit extérieur sur au moins une partie dudit conduit extérieur.
